# EUROPEAN PATENT APPLICATION

(11) **EP 3 588 847 A1**
(43) Date of publication of application: **01.01.2020**
(21) Application number: 17897575.1
(22) Date of filing: 15.12.2017
(51) Int. Cl.: H04L 12/18, H04W 4/06

(54) **MULTICAST SIGNAL TRANSMITTING AND RECEIVING METHOD AND DEVICE**

(30) Priority: 22.02.2017 US 201762461791 P; 19.10.2017 US 201762574224 P; 05.11.2017 US 201762581755 P
(71) Applicant: LG Electronics Inc., Seoul 07336 (KR)
(72) Inventor: KWON, Woosuk, Seoul 06772 (KR); PARK, Jonghwan, Seoul 06772 (KR); YOON, Joonhee, Seoul 06772 (KR)
(74) Representative: Frenkel, Matthias Alexander
(86) International application number: PCT/KR2017/014817
(87) International publication number: WO 2018/155798

(57) **Abstract**

The present invention relates to a device and a method for multicasting content data. A multicast device according to one embodiment of the present invention comprises: a content server including content data; an operator controller for providing first signaling information to the content server; a multicast sender for receiving the content data from the content server and transmitting the same; and a multicast network controller for providing second signaling information to the multicast sender, wherein the multicast sender is connected to a plurality of multicast networks.

## Description

### [Technical Field]

The present invention relates to an apparatus and method for transmitting and receiving multicast signals.

### [Background Art]

With the development of digital technology and communication technology, the distribution and demand of audio/video-oriented multimedia contents are rapidly expanding in various areas such as broadcasting, movies, Internet and personal media. In addition, as the size of TV screens at home increases with the development of display technology, ultra high definition (UHD) broadcasting services are increasingly discussed.

Regarding a broadcast service, a multicast transmission scheme for transmitting the same content to a plurality of users is effective because it may take advantage of both unicast and broadcast. However, the conventional multicast transmission scheme is available within a single network, and cannot support a multicast service between heterogeneous networks. As a result, when a multicast reception apparatus connects and disconnects different access networks, a new multicast service is required to start after the existing multicast service is terminated.

### [Disclosure]

### [Technical Problem]

An object of the present invention is to provide a multicast signal transmission method and apparatus which are capable of improving transmission efficiency.

Another object of the present invention is to provide a transmission apparatus and method for providing a multicast service over a broadcast network.

Another object of the present invention is to provide an apparatus and method for receiving content data from one multicast server over a plurality of access networks.

Another object of the present invention is to propose a framework for providing a dynamic service from a server over a plurality of multicast networks.

### [Technical Solution]

In one aspect of the present invention, provided herein is a multicast system including a content server containing content data, an operator controller configured to provide first signaling information to the content server, a multicast sender configured to receive the content data from the content server and transmit the same, and a multicast network controller configured to provide second signaling information to the multicast sender, wherein the multicast sender is connected to a plurality of multicast networks.

The operator controller may transmit operator control information to the multicast network controller, wherein the multicast network controller may provide information included in the operator control information as the second signaling information.

The operator control information may include configuration information about the content data transmitted by the content server, and link information through which the content data is transmitted.

The multicast network controller may transmit multicast sender information to the operator controller, wherein the operator controller may transmit the multicast sender information as the first signaling information.

The multicast sender information may include ingest link information indicating a destination of the content data transmitted by the content server.

The plurality of multicast networks may include a mobile access network and an Internet Service Provider (ISP) network.

In another aspect of the present invention, provided herein is a multicast method including transmitting and receiving signaling information by an operator controller and a multicast network controller, providing, by the operator controller, first signaling information to the content server based on the signaling information, and providing, by the multicast network controller, second signaling information to a multicast sender based on the signaling information, wherein the multicast sender is connected to a plurality of multicast networks.

The operator controller may transmit operator control information to the multicast network controller, wherein the multicast network controller may provide information included in the operator control information as the second signaling information.

The operator control information may include configuration information about the content data transmitted by the content server, and link information through which the content data is transmitted.

The multicast network controller may transmit multicast sender information to the operator controller, wherein the operator controller may transmit the multicast sender information as the first signaling information.

The multicast sender information may include ingest link information indicating a destination of the content data transmitted by the content server.

The plurality of multicast networks may include a mobile access network and an Internet Service Provider (ISP) network.

### [Advantageous Effects]

According to an embodiment of the present invention, transmission efficiency of a broadcast system may be enhanced.

According to an embodiment of the present invention, a multicast service may be provided between heterogeneous networks.

According to an embodiment of the present invention, reproduction for multicast service in a receiver may be started quickly.

According to an embodiment of the present invention, a connection may be dynamically established and released according to a service provided by a content server.

According to an embodiment of the present invention, when a connection is required, complexity according to individual connections may be reduced by using a common framework.

### [Description of Drawings]

FIG. 1 is a diagram illustrating network architecture according to one embodiment of the present invention.
FIG. 2 is a diagram illustrating a content network according to an embodiment of the present invention.
FIG. 3 is a diagram illustrating a case where a content network according to an embodiment of the present invention includes a satellite relay.
FIG. 4 is a diagram illustrating a case where a content network according to an embodiment of the present invention includes a content delivery network (CDN).
FIG. 5 is a diagram illustrating a wired multicast network according to an embodiment of the present invention.
FIG. 6 is a diagram illustrating a mobile multicast network according to an embodiment of the present invention.
FIG. 7 is a diagram illustrating a user network according to an embodiment of the present invention.
FIG. 8 is a diagram illustrating network architecture for ABR multicast according to an embodiment of the present invention.
FIG. 9 is a diagram illustrating a protocol for an adaptive multicast stream according to an embodiment of the present invention.
FIG. 10 is a diagram illustrating a protocol for adaptive multicast streaming according to an embodiment of the present invention.
FIG. 11 is a diagram illustrating a protocol for signaling and control messages according to an embodiment of the present invention.
FIG. 12 is a diagram illustrating a protocol for signaling and control messages according to an embodiment of the present invention.
FIG. 13 is a diagram illustrating a protocol for transmitting media data over an IP network according to an embodiment of the present invention.
FIG. 14 is a diagram illustrating a media delivery protocol for IP multicasting according to an embodiment of the present invention.
FIG. 15 is a diagram illustrating a media delivery protocol for IP multicasting according to an embodiment of the present invention.
FIG. 16 is a diagram illustrating a media delivery protocol for IP multicasting according to an embodiment of the present invention.
FIG. 17 illustrates data transmission over a plurality of multicast network according to an embodiment of the present invention.
FIG. 18 shows an operation procedure for data transmission between the elements constituting a plurality of content networks and a plurality of multicast networks according to an embodiment of the present invention.
FIG. 19 shows information delivered by a multicast network controller in the architecture having a plurality of multicast networks according to an embodiment of the present invention.
FIG. 20 shows information delivered to a multicast network controller by an operator controller over a plurality of multicast networks according to an embodiment of the present invention.
FIG. 21 is a diagram illustrating a multi-network delivery according to an embodiment of the present invention.
FIG. 22 is a diagram illustrating a multi-network delivery according to another embodiment of the present invention.
FIG. 23 is a diagram illustrating coverage in a multi-network delivery environment according to an embodiment of the present invention.
FIG. 24 illustrates a method of acquiring service list related information in a multi-network delivery environment according to an embodiment of the present invention.
FIG. 25 illustrates a method of acquiring service list related information in a multi-network delivery environment according to another embodiment of the present invention.
FIG. 26 illustrates a process of receiving adaptive media streaming according to an embodiment of the present invention.
FIG. 27 is a diagram illustrating a process in which access networks to which an adaptive media streaming reception apparatus is connected are changed according to an embodiment of the present invention.
FIG. 28 is a diagram illustrating a receiver structure according to an embodiment of the present invention.

### [Best Mode]

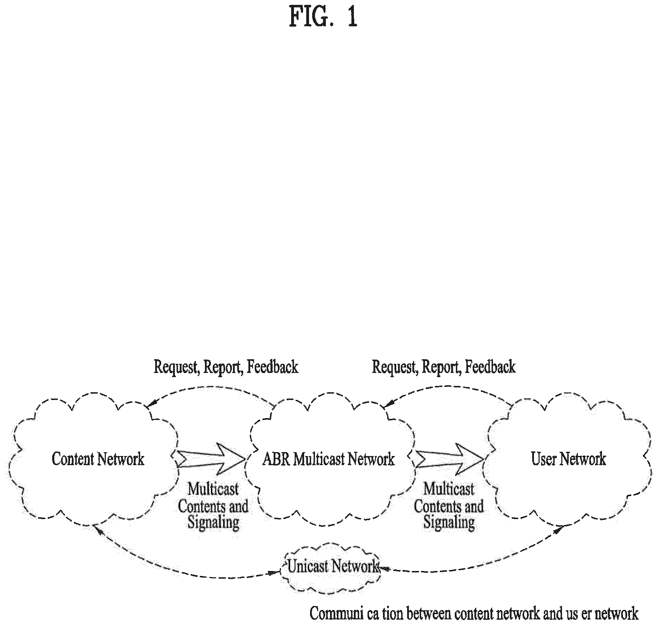

FIG. 1 is a diagram illustrating network architecture according to one embodiment of the present invention. As shown in FIG. 1, a network for adaptive media streaming may include a content network, an adaptive bit rate (ABR) multicast network, and a user network. This is a functional classification of networks used to support adaptive media streaming in an Internet Protocol (IP)-based multicast network. Each network may also connect to an additional network for supporting other functions than adaptive media streaming. For example, the content network and the user network may each connect to a unicast network for unicast services.

The user network may transmit a request, report, and feedback for content to be received to the ABR multicast network. The ABR multicast network may transmit a request, report, and feedback to the content network based on the information received from the user network. The content network may transmit multicast content and signaling information to the ABR multicast network based on the information received from the ABR multicast network. The ABR multicast network may transmit the received multicast content and signaling information to the user network to provide a multicast service.

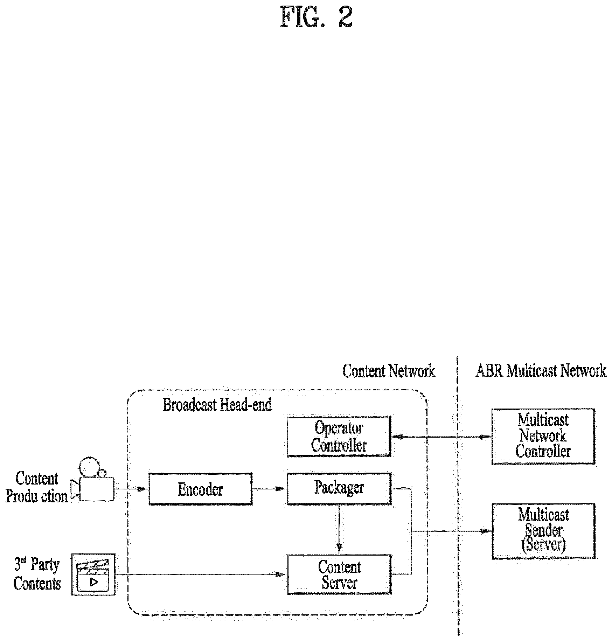

FIG. 2 is a diagram illustrating a content network according to an embodiment of the present invention. The content network may serve to generate, collect, and package content for adaptive multicast streaming, and may include various content sources. The content network may include a head-end of a broadcaster that provide terrestrial and cable broadcasting to provide broadcast content. The broadcaster head-end may include at least one of an encoder to encode content generated in content production, a packager to convert the encoded content, or a content server to store the content.

In addition, the content network may further include a satellite reception network to receive produced services from a geographically remote area. The content network may also include a content server to provide pre-stored content. The content network may include, besides the content server, a Content Delivery Network (CDN) to provide media transfer. Accordingly, the content network may generate and transmit a signaling message, a control message, and the like which are related to the content.

A separate signaling message or control message may be exchanged between several nodes belonging to the content network for proper interaction among the content, signaling message, control message, and the like, and these messages may not be delivered to other external networks. The signaling message or control message that is not transmitted to the external network may be referred to as internal network signaling.

As described above, the content network may include a broadcaster head-end. Content generated by the broadcaster may be subjected to encoding and packaging, and may then be delivered to a multicast transmitter so as to be multicast or be stored in the content server and delivered to the multicast transmitter when necessary. Components included in the broadcaster head-end of the content network are described below.

First, an encoder included in the broadcaster head-end encodes content. A packager included in the broadcaster head-end may convert the encoded content and data into a format suitable for multicast transmission. The format suitable for multicast transmission may be, for example, a media segment created by dividing one content item. In addition, when necessary, the packager may generate signaling that can be received by the receiver or a device belonging to a network. The media segment generated by the packager may be delivered directly to the multicast sender and multicast. However, in the case where the media segment is data that need not be delivered immediately, it may be stored in the content server. The content server included in the broadcaster head-end may store media data and related signaling. The content server may also store third party content generated by a third party and utilize the same for multicast if necessary. Here, the content stored in the content server may not require a separate encoding operation. Accordingly, the content server may store the media segments and the file formed by encoding or packaging the content, and may transmit the same when there is a transmission request. According to an embodiment, an encoding result of the media data may be stored in the content server, and a separate packaging operation may be required depending on the type of the transmission network. An operator controller included in the broadcaster head-end may manage content production, the content server, and the like, and manage and control a series of operations related to multicasting. The operator controller may collect control and signaling data for a plurality of devices and nodes in the content network and, if necessary, transmit the control and signaling data to the multicast network. Thereby, the operator controller may enable the multicast network to perform signaling and control related to multicast. In addition, the operator controller may receive and process unicast information transmitted from a decoding device or a player to use the same for multicast.

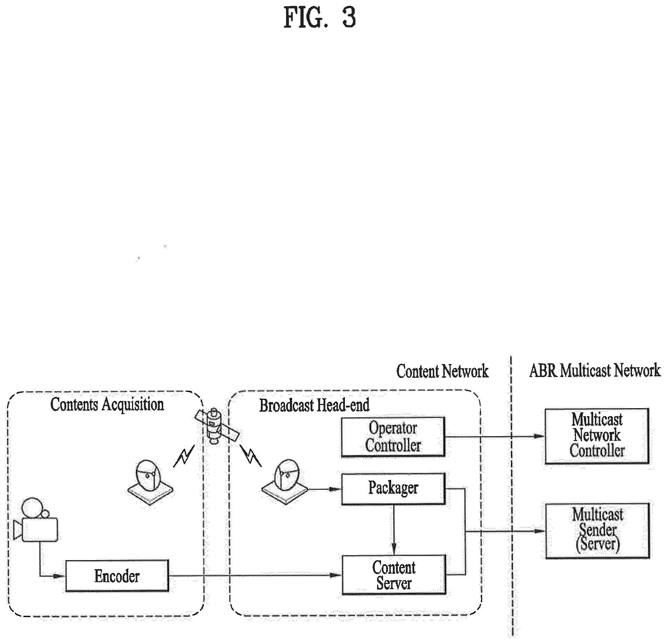

FIG. 3 is a diagram illustrating a case where a content network according to an embodiment of the present invention includes a satellite relay. The content network provided with a satellite relay may include an encoder, a satellite transmitter, a satellite receiver, a packager, a content server, and an operator controller. The head-end of a broadcaster providing terrestrial and cable broadcasting may include a satellite reception network for receiving services of geographically remote content producers. The satellite transmitting side may be the head-end of another broadcaster. In this case, a satellite transmission/reception network to which head-ends of a plurality of broadcasters are connected may be included in the content network. The content received via the satellite system may be subjected to encoding and packaging, and may then be delivered to the multicast sender so as to be multicast or be stored in the content server so as to be delivered to the multicast sender when necessary. The encoder of the content network in which the satellite relay is included may perform encode content. Here, the encoder may be connected to a satellite transmission device for relaying broadcast data to a satellite. The satellite relay system of the content network that includes the satellite relay may be used to provide live broadcasting for a geographically distant place. For example, overseas sports, concerts, news, and the like may be broadcast in real time through the satellite relay system. For this purpose, a separate satellite transmission related protocol and transmission scheme may be used. Data passed through the satellite transmission/reception system is delivered to the packager. The packager of the content network including the satellite relay is configured as illustrated in the previous drawing. The content server of the content network including the satellite relay may store media data and related signaling. In live broadcasting to a geographically distant place, the data passed through the packager may be transmitted directly to the multicast sender, but the data and related signaling may be stored in the head-end of the broadcaster for later use for the content. Detailed description thereof has been given with reference to the previous drawings. The description of the operator controller of the content network including the satellite relay has been given with reference to the previous drawings.

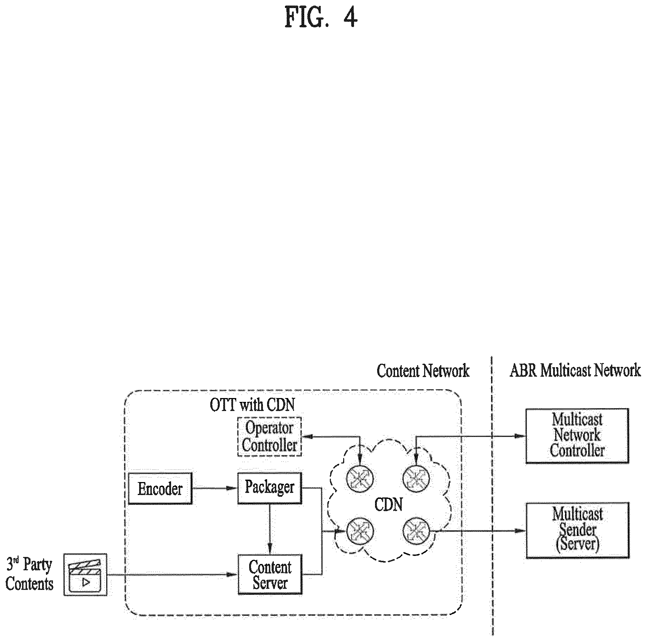

FIG. 4 is a diagram illustrating a case where a content network according to an embodiment of the present invention includes a content delivery network (CDN). Over the top (OTT) for providing video content using the IP network may be considered as one embodiment of the content network. In the case of OTT, the CDN may be connected for efficient use of network resources. The content network including the CDN may include an encoder, a packager, a content server, an operator controller, and the CDN. The content of the OTT may be delivered to the CDN through encoding and packaging. In addition, the encoded and packaged content may be stored in the content server and then delivered to the CDN in response to a request for the content. The content delivered to the CDN may be delivered to the multicast sender. According to an embodiment, the content of the OTT may be delivered to the multicast sender directly without assistance of the CDN and multicast. The encoder of the OTT may encode the content. The OTT may provide a live service or produce content to be stored in the content server. The packager of the OTT is configured as described above with reference to the previous drawings. The content server of the OTT may store media data and relevant signaling to be provided by the OTT. The content server may also store third party content generated and utilize the same for multicast if necessary. Here, the content stored in the content server may not require a separate encoding operation. Accordingly, the content server may store the media segment and the file formed by encoding or packaging the content, and may transmit the same when there is a transmission request. According to an embodiment, an encoding result of the media data may be stored in the content server, and a separate packaging operation may be required depending on the type of the transmission network. The operator controller may collect control and signaling data for a plurality of devices and nodes in the content network and, if necessary, transmit the control and signaling data to the multicast network. Thereby, the operator controller may enable the multicast network to perform signaling and control related to multicast. In addition, the operator controller may receive and process unicast information transmitted from a decoding device or a player to use the same for multicast. The OTT and CDN may each include a separate operator controller. The operator controller included in the OTT and the operator controller included in the CDN may communicate with each other.

The ABR multicast network is a network that multicasts content delivered from the content network over the IP network. Here, the IP network may correspond to either a managed network where QoS is managed by a network provider and unauthorized traffic may be restricted, or an unmanaged network where unauthorized traffic is not restricted. In addition, the IP network may be connected in a wired or wireless manner by devices included in the multicast network or the user network. In using the IP network for multicast, the IP network connected to the content network may be different from the IP network connected to the user network. That is, the content network and the user network may be connected to separate IP networks. In this case, the separate IP networks may conform to a connection protocol between Internet Service Providers (ISP) providing the respective networks. Even in this case, the multicast content is transparent between the transmitter and the receiver. That is, the output data of the transmitter is the same as the input data of the receiver, even though it passes through several ISP networks and nodes on the network.

The multicast network for transmitting and receiving multicast streams may include a multicast sender (server), a multicast receiver (client), and a multicast network controller. The multicast network may include a plurality of networks, depending on the location or connection status of the sender and receiver of the network for multicast. In addition, a separate protocol may be used for each network.

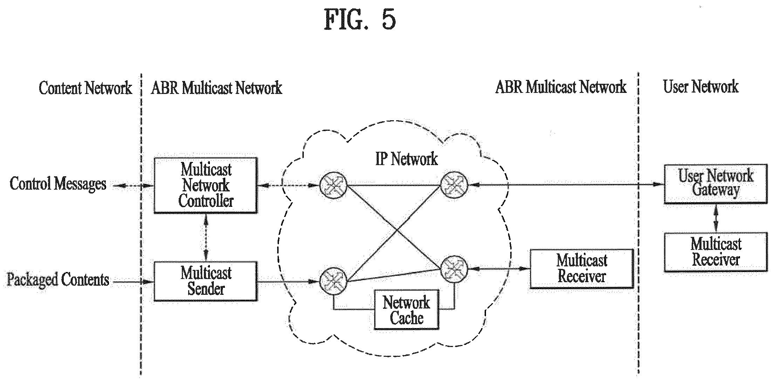

FIG. 5 is a diagram illustrating a wired multicast network according to an embodiment of the present invention. Multicast streams may be delivered over a wired IP network. A network provided by an ISP may be used between the multicast sender and the multicast receiver. According to an embodiment, the multicast stream may be delivered over an IP network managed by a plurality of ISPs, and the management entities of the multicast sender, receiver, controller and IP network may be different from each other. In this case, transmission of the multicast stream may conform to a connection protocol corresponding to each ISP.

The multicast sender included in the multicast network may transmit content data to each multicast receiver. The multicast sender may receive packaged content from the content network and transmit the packaged content to a plurality of multicast receivers using the multicast protocol. The multicast receiver included in the multicast network may receive the content data transmitted from the multicast sender and deliver the content data to a decoding device capable of reproducing the content data. The multicast receiver may cache the content data to allow the decoding device to reproduce the content data efficiently. According to an embodiment, the multicast receiver may be configured in the same apparatus as the decoding device. In an embodiment, a multicast stream may be received through a gateway of the user network. In this case, the multicast receiver may be a component of the user network.

The multicast network controller included in the multicast network may control content transmission of the multicast sender and related session information. In addition, the multicast network controller may manage and transmit signaling information for configuration of each of the multicast sender and multicast receivers. The multicast network controller may be connected to each of the multicast sender and multicast receivers using a protocol separate from that of the multicast content. According to an embodiment, the multicast network controller may be connected only to the multicast sender, and signaling information transmitted to the multicast receiver may conform to the same protocol as that of the multicast content.

A network cache included in the multicast network may include a node or a device functioning as a cache between the multicast sender and the multicast receivers. In a multicast transmission, the network cache may store a proper range of content for efficient use of network resources, and deliver a multicast stream to the multicast receiver. According to an embodiment, the network cache may perform an update procedure for the multicast sender and the cached content.

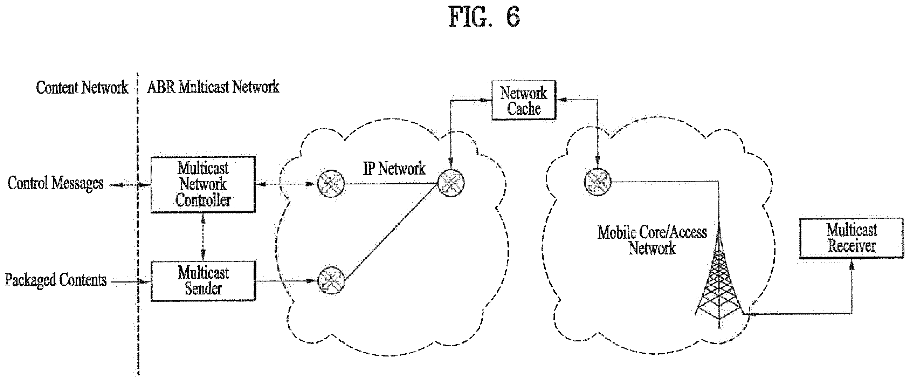

FIG. 6 is a diagram illustrating a mobile multicast network according to an embodiment of the present invention. A multicast stream may be delivered over a wired IP network. However, for a mobile receiver, the multicast stream may be delivered over a mobile access network. For IP multicast, a network that supports IP transport may be used as the mobile access network. In addition, the mobile access network may support multicast to provide a multicast stream to a plurality of mobile receivers.

The multicast sender included in the multicast network may transmit content data to each multicast receiver. The multicast sender may receive packaged content from the content network and transmit the packaged content to a plurality of multicast receivers using a multicast protocol. The multicast receiver included in the multicast network may receive the content data transmitted from the multicast sender and deliver the content data to a decoding device capable of reproducing the content data. The multicast receiver connected to the mobile access network may receive a radio signal for the mobile access network. According to an embodiment, the multicast receiver connected to the mobile access network may be connected to the decoding device according to a separate wireless access protocol. The multicast receiver may cache the content data to allow the decoding device to reproduce the content data efficiently. According to an embodiment, the multicast receiver may be configured in the same apparatus as the decoding device.

The multicast network controller included in the multicast network may control content transmission of the multicast sender and related session information. In addition, the multicast network controller may manage and transmit signaling information for configuration of each of the multicast sender and multicast receivers. The multicast network controller may be connected to each of the multicast sender and multicast receivers using a protocol separate from that of the multicast content. According to an embodiment, the multicast network controller may be connected only to the multicast sender, and signaling information transmitted to the multicast receiver may conform to the same protocol as that of the multicast content. In addition, the IP network and the mobile access network may each include a multicast network controller. In this case, the multicast network controller may transmit and receive control and signaling information about the corresponding network. Each of the multicast network controllers may use a separate protocol to perform communication between the multicast network controllers.

The network cache included in the multicast network may include a node or a device functioning as a cache between the multicast sender and the multicast receivers. The network cache may be included in each of a plurality of networks constituting the multicast network, and a plurality of network caches may be included in each network. In addition, some nodes of each network may simultaneously perform the cache function. The network cache may store a proper range of content to efficiently use network resources in multicast transmission, and deliver a multicast stream to the multicast receivers. According to an embodiment, the network cache may perform an update procedure for the multicast sender and the cached content.

The user network may be referred to as a network to receive data from the multicast network and deliver the same to a device to consume the content included in the data. The user network may be implemented in various forms according to the configuration of the user network and the type of a service provided by multicasting. According to an embodiment, the multicast receiver described above may be included in the user network. When the multicast receiver is included in the user network, the multicast receiver may receive multicast content through a device serving as a gateway or proxy included in the user network. In this case, the gateway or proxy may be considered as a component of the ABR multicast network.

The multicast receiver may serve as a server or a multicast sender in the user network. Accordingly, the decoding device included in the user network may consume the multicast content, and may enable multicast streaming even when the decoding device cannot directly receive the multicast content.

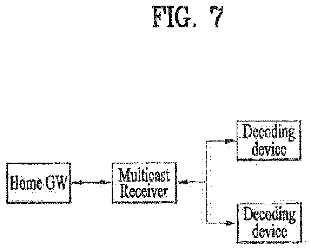

FIG. 7 is a diagram illustrating a user network according to an embodiment of the present invention. As an embodiment of the user network, a home network may be considered. The multicast receiver may directly receive data transmitted through multicasting, or a home gateway belonging to the home network may receive the data and deliver the data to the multicast receiver.

When the home network includes a plurality of devices, the home gateway may receive data from the ABR multicast network. The home gateway may transmit and receive data to and from an external network, while serving as a proxy. In the case where the home gateway operates as a proxy, the home gateway may cache data to be delivered to the multicast receiver.

The multicast receiver may be included in the ABR multicast network described above, or may be located inside the home network due to the configuration of the network. According to the configuration of the home network, the multicast receiver may serve as a proxy. In the case where the multicast receiver cannot play the multicast stream directly, a decoding device capable of playing the multicast stream may be additionally connected to the multicast receiver. In addition, the multicast receiver may transmit the multicast stream in connection with a plurality of decoding devices.

The decoding device may be defined as a device to play a multicast stream and provide the multicast stream to a user. A plurality of decoding devices may connect to the multicast receiver. The decoding devices may transmit and receive data in a unicast or multicast manner. The decoding device may connect to a unicast network as well as the multicast network to receive a multicast stream. The decoding devices may transmit a request, a report, or the like to the content network or the ABR multicast network. In some embodiments, besides the decoding device, a decoding module and a display screen may be included in the home network as separate devices. The decoding device may also be configured together with the multicast receiver as a single device.

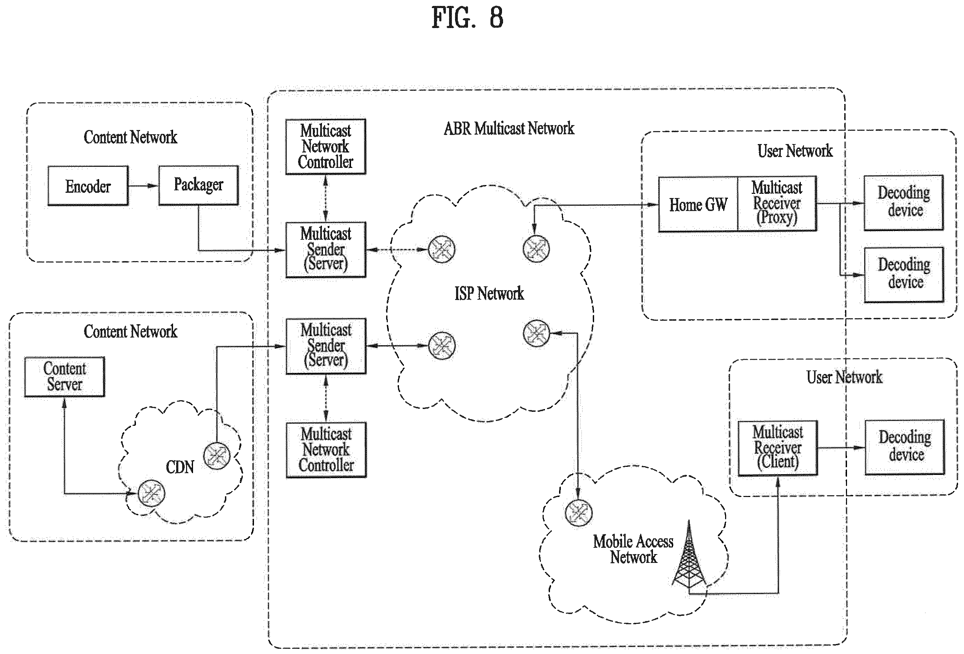

FIG. 8 is a diagram illustrating network architecture for ABR multicast according to an embodiment of the present invention. The figure illustrates an example of overall network architecture for adaptive media streaming. The network architecture for adaptive media streaming may include a content network, an ABR multicast network, and a user network. Details of each of the networks are the same as those described above with reference to the previous drawings. The node or entity defined in the present invention may be a logical constituent. According to an embodiment, each node may be configured as a separate device, or may operate together with a neighboring node in the same apparatus. As shown in the figure, a plurality of networks may be connected to each other and exchange signaling and management information with each other for efficient multicast streaming.

Hereinafter, network interfaces and protocols for adaptive media streaming will be described. The protocols may be classified into a media protocol by which media data is actually transmitted, and a signaling protocol for controlling each node or entity to transmit media data or transmitting configuration information about the media data to various nodes and entities including a receiver. Signaling and control information may be transmitted by the signaling protocol. However, in the case where the receiver receives with media content by a single connection, a separate signaling path may not be configured. In this case, the signaling and control information may be delivered by the media protocol.

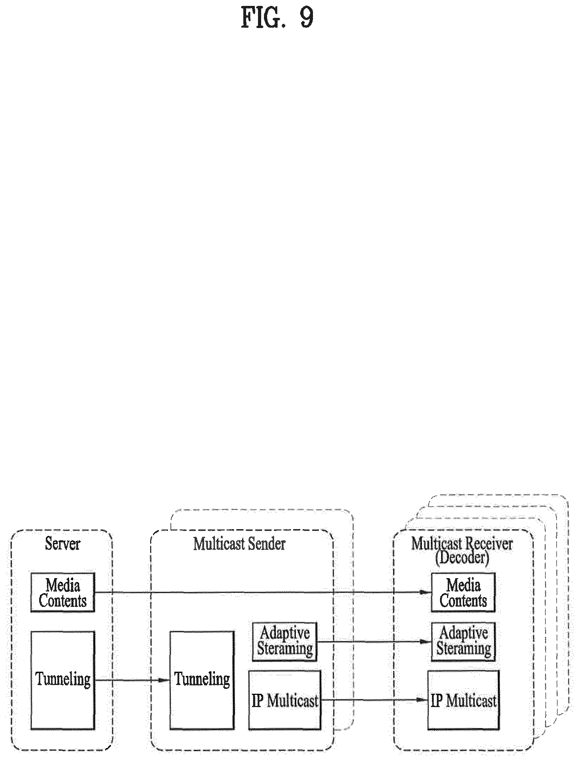

FIG. 9 is a diagram illustrating a protocol for adaptive multicast streaming according to an embodiment of the present invention. As shown in the figure, a multicast receiver may include the same devices and modules as a decoder. Media content created in the content network or stored in a server may be delivered to the decoding device of a user. The media content may be transmitted in a multicast manner so as to be delivered to a plurality of users.

In the adaptive multicast streaming environment, creation and multicast transmission/reception of content may be performed separately. Therefore, a protocol for delivering created content to a node and an entity configured to perform multicast transmission and a protocol for transmitting and receiving the content in the adaptive streaming format in the multicast manner may be defined, respectively. In the figure, the node and the entity are shown as multicast senders. Content data passes through a plurality of nodes or entities, and an appropriate protocol is needed between the nodes or the entities. In this case, for a protocol on a node or an entity, a protocol for efficiently delivering data to the next node in real time may be used. This protocol may be referred to as a tunneling protocol. Accordingly, as shown in the figure, a tunneling protocol may be defined between the server and a multicast sender. In this case, the media content is delivered as a payload of the tunneling protocol, but it should be noted that the tunneling protocol can operate regardless of the format of the media content.

In the multicast sender, a protocol for supporting adaptive streaming for multicast receivers may be defined, and the IP multicast scheme may be employed to deliver the adaptive streaming to a plurality of multicast receivers. Depending on the protocol of adaptive streaming, the IP multicast scheme may be defined as a combination of TCP/IP and UDP/IP.

When the multicast receiver can serve as a decoder and player, the multicast receiver may obtain adaptive streaming data by receiving an IP multicast packet, decode data corresponding to the media content format from the data and play decoded data.

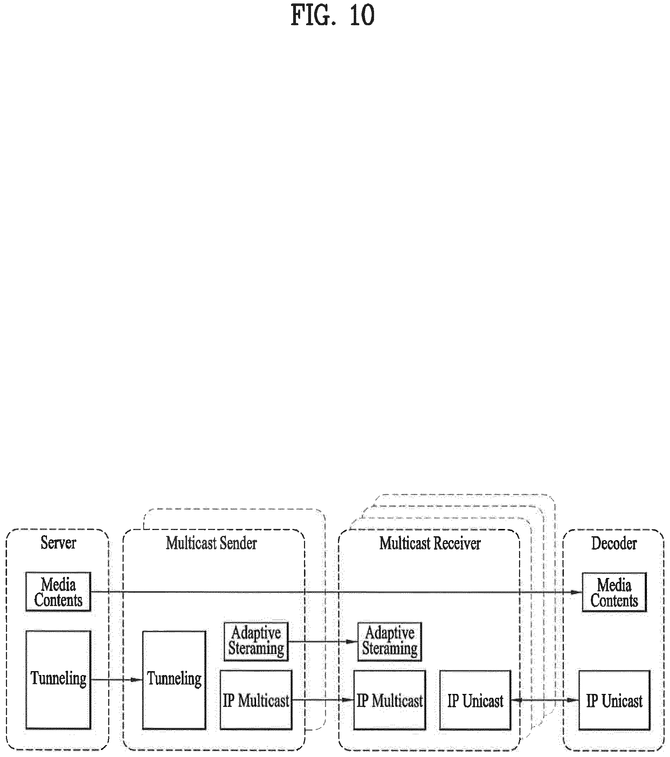

FIG. 10 is a diagram illustrating a protocol for adaptive multicast streaming according to an embodiment of the present invention. As shown in the figure, a multicast receiver may be configured as a device or module separate from the decoder (media player). Media content created in the content network or stored in a server may be delivered to the decoding device of a user. The media content may be transmitted in a multicast manner so as to be delivered to a plurality of users.

In the adaptive multicast streaming environment, creation and multicast transmission/reception of content may be performed separately. Therefore, a protocol for delivering created content to a node and an entity configured to perform multicast transmission and a protocol for transmitting and receiving the content in the adaptive streaming format in the multicast manner may be defined, respectively. In the figure, the node and the entity are shown as multicast senders. Content data passes through a plurality of nodes or entities, and an appropriate protocol is needed between the nodes or the entities. In this case, for a protocol on a node or an entity, a protocol for efficiently delivering data to the next node in real time may be used. This protocol may be referred to as a tunneling protocol. Accordingly, as shown in the figure, a tunneling protocol may be defined between the server and a multicast sender. In this case, the media content is delivered as a payload of the tunneling protocol, but it should be noted that the tunneling protocol can operate regardless of the format of the media content.

In the multicast sender, a protocol for supporting adaptive streaming for multicast receivers may be defined, and the IP multicast scheme may be employed to deliver the adaptive streaming to a plurality of multicast receivers. Depending on the protocol of adaptive streaming, the IP multicast scheme may be defined as a combination of TCP/IP and UDP/IP.

When the multicast receiver and the decoder (player) are configured as separate devices or modules, the multicast receiver may obtain adaptive streaming data by receiving an IP multicast packet and deliver the same to the decoder. Here, an IP unicast protocol may be used between the multicast receiver and the decoder. The content data received by the multicast receiver may be delivered to the decoder by the IP unicast protocol, and the decoder may decode and play data corresponding to the received media content format.

Hereinafter, a protocol for signaling and control messages will be described. Transmission of signaling and control messages may be defined by a protocol distinct from the protocol for media content transmission in order to provide transmission control, scheduling, configuration information, and the like when each node and each entity perform adaptive streaming. Depending on a case where each node and each entity are connected, the protocol may be defined as a separate protocol. In the above-described network architecture, a signaling and control message may be included and transmitted in the protocol for transmission of media content. However, such a signaling and control message conforms to a protocol for media content delivery.

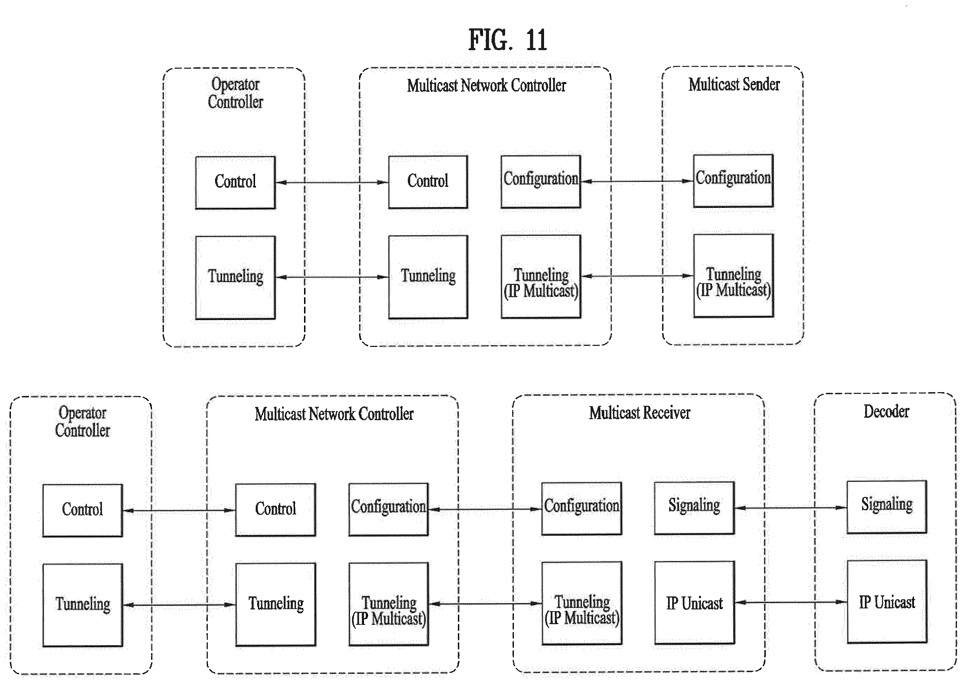

FIG. 11 is a diagram illustrating a protocol for signaling and control messages according to an embodiment of the present invention. In the above-described network architecture, a control protocol may be defined between an operator controller included in the content network and a network controller included in the multicast network. The network controller may send a response or report message for a control message to the operator controller in order for the operator controller to generate control and management messages. Thus, the tunneling protocol for sending a control message may be bidirectionally configured. A single operator controller may transmit and receive control messages to and from a plurality of multicast network controllers. In addition, each of the multicast network controllers may be managed by a separate management entity.

The network controller may deliver configuration related information about the network to the multicast sender and the multicast receiver. The network controller may deliver configuration information about network resources, information about mapping between the nodes of the network, routing information, and the like. It may also deliver configuration information received from the operator controller to the multicast sender or the multicast receiver. In this process, the protocol for transmission from the multicast network controller to the multicast sender may be distinguished from the protocol for transmission to the multicast receiver. The upper part of the figure shows the protocol for transmission from the network controller to the multicast sender, and the lower part of the figure shows the protocol for transmission from the network controller to the multicast receiver.

In addition, IP multicast may be used to deliver a configuration message from one network controller to a plurality of multicast senders and multicast receivers. Connection information, statistical information, and the like collected by the multicast senders and the multicast receivers may be reported to the multicast network controller. Since this process can be carried out independently by each of the multicast senders and multicast receivers, a unicast protocol may be used. This set of control information, configuration information, and the like may be updated dynamically and be transmitted immediately or by scheduling.

The multicast receiver may use a signaling protocol for transmitting the received adaptive streaming data to a decoding device. Here, an IP unicast protocol may be defined to provide separate information to individual decoding devices. In addition, the decoding device may transmit signaling of a request of the decoding device to the multicast receiver using the IP unicast protocol. Thus, the protocol may be defined as a bidirectional protocol between the multicast receiver and the decoding device.

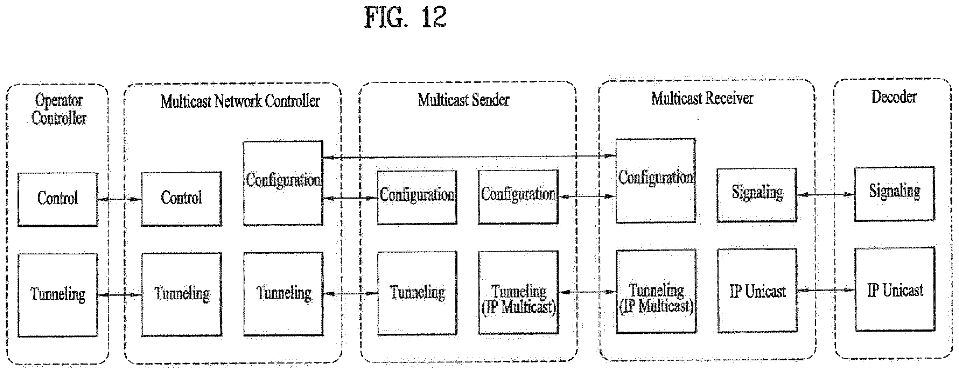

FIG. 12 is a diagram illustrating a protocol for signaling and control messages according to an embodiment of the present invention. As shown in the figure, the multicast network controller may be connected to the multicast receiver via a multicast sender rather than being connected directly to the multicast receiver.

The network controller may deliver configuration related information about the network to the multicast sender and the multicast receiver. The network controller may deliver configuration information about network resources, information about mapping between the nodes of the network, routing information, and the like. It may also deliver configuration information received from the operator controller to the multicast sender or the multicast receiver. However, since the multicast controller is connected only to the multicast sender and not to the multicast receiver, the multicast sender may forward the configuration message delivered from the network controller to the multicast receiver. For a protocol or message set related to configuration in the multicast network controller, the protocol for transmission to the multicast sender may be distinguished from the protocol for transmission to the multicast receiver.

In addition, IP multicast may be used to deliver a configuration message from one network controller to a plurality of multicast senders and multicast receivers. Connection information, statistical information, and the like collected by the multicast senders and the multicast receivers may be reported to the multicast network controller. Since this process can be carried out independently by each of the multicast senders and multicast receivers, a unicast protocol may be used. This set of control information, configuration information, and the like may be updated dynamically and be transmitted immediately or by scheduling.

Information such as a report to be transmitted from the multicast receiver to the multicast network controller may be delivered to the multicast network controller via the multicast sender. That is, the multicast sender may forward a report message or the like to be delivered from the multicast receiver to the multicast network controller. Operations of the other protocols may be the same as those in the above-described drawings.

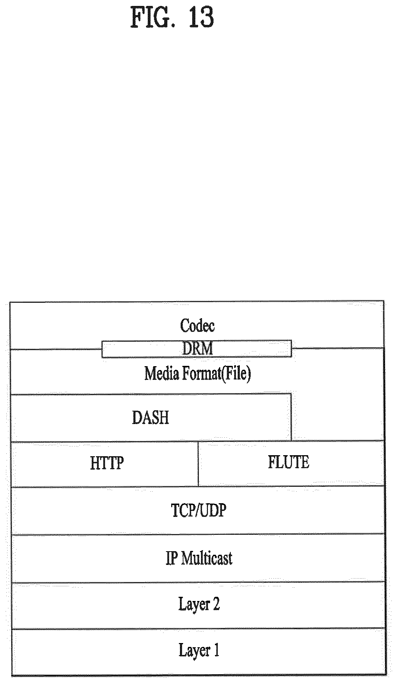

FIG. 13 is a diagram illustrating a protocol for transmitting media data over an IP network according to an embodiment of the present invention. A protocol and a packet format may be determined according to each layer. Each protocol may be configured independently or specific protocols may be combined for interoperability. The operation of the encoder of compressing and converting the collected video and audio data into an appropriate codec and delivering a packager may be performed as internal data processing of a transmission system. For multicasting of the video and audio data, an efficient codec may be used. A codec such as High Efficiency Video Coding (HEVC) or Advanced Video Coding (AVC) may be used for the video data, and an audio codec such as Advanced Audio Coding (AAC), Audio Compression 4 (AC4), or Moving Picture Experts Group-H (MPEG-H) may be used for the audio data.

Each codec may be packaged in a form suitable for transmission or storage. For this purpose, a format such as ISO Base Media File Format (ISOBMFF), Common Media Application Format (CMAF), or MPEG-2 TS (Transport Stream) may be used. In the process of packaging content data encoded with a codec, Digital Rights Management (DRM) may be added to allow only a specific receiver to play the contents, and an authentication key value used in the DRM may be transmitted on a separate link or channel.

For media data configured in a file format, a protocol capable of transmitting files directly, such as File Delivery over Unidirectional Transport (FLUTE), may be used according to transmission scheme. In addition, a protocol supporting adaptive streaming, such as Dynamic Adaptive Streaming over HTTP (DASH), may be used. A lower layer protocol may be used according to the configuration of FLUTE or DASH. For example, when DASH is used, HTTP may be used as a lower layer protocol, or FLUTE may be used as a lower layer protocol considering a DASH segment as a file.

For IP multicast, Transmission Control Protocol/Internet Protocol (TCP/IP) or User Datagram Protocol/Internet Protocol (UDP/IP) may be used according to the configuration of the upper layer protocol. Internet Group Management Protocol (IGMP) capable of managing subscription of a IP multicast group and the like may also be used in the multicast receiver. The Layer 2 protocol and Layer 1 protocol may be defined according to the transport links thereof. That is, optimized protocols may be configured according to links between the nodes and entities configured on a network. For example, in a Local Area Network (LAN) environment, Ethernet may be defined as a protocol for Layer 2, and Carrier Sense Multiple Access with Collision Detection (CSMA/CD) may be defined as protocol for Layer 1.

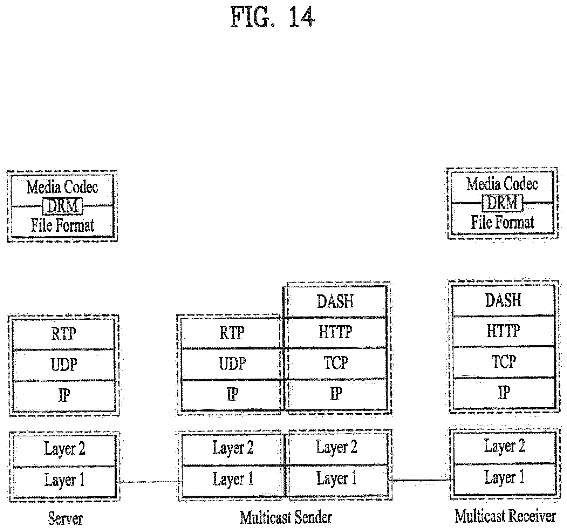

FIG. 14 is a diagram illustrating a media delivery protocol for IP multicasting according to an embodiment of the present invention. The media delivery protocol is a specific embodiment of a protocol according to a path through which media content is transmitted. In the illustrated case, the multicast receiver is configured with the same device and module as the decoder (media player).

Protocols used on the server for content are a media codec and a file format. The media codec may include a video codec, an audio codec or other encoding formats. The video codec may include a codec such as HEVC or AVC, and the audio codec may include a codec such as AAC, AC4, and MPEG-H. The protocol for the file format may be defined as a format for transmitting or storing a codec format in the form of a file. For this purpose, file formats such as ISOBMFF and CMAF may be used, and the format of MPEG-2 TS may be used when the existing broadcast network is connected. A plurality of file formats may be used in consideration of transmission efficiency.

For a protocol between the server and the multicast sender, a protocol for efficient delivery of file formats may be mainly defined. Therefore, data of the content created in the server may be delivered using a tunneling protocol. As the tunneling protocol, a real-time transmission protocol such as RTP may be mainly used, and other IP-based tunneling protocols which are available to the corresponding network may also be used. In this case, an existing protocol may be used or the definition of a field may be changed so as to be suitable for the network. In the multicast sender, a tunneling protocol may be defined at the input terminal to receive a file transferred from the server using the tunneling protocol. In this case, since the format for the file transmitted using the tunneling protocol is data to be delivered from the multicast sender to the multicast receiver, the tunneling protocol may operate regardless of the format of the data.

As the protocol between the multicast sender and the multicast receiver, a protocol for adaptive streaming may be mainly defined. This protocol may include a DASH-based protocol. For this purpose, the lower layer protocol is based on IP multicast. In order for DASH to operate, a protocol such as HTTP may be used together with DASH. In the case where a DASH segment is used in the form of a file, a file transfer protocol such as FLUTE may be configured. In addition, TCP/IP may be used for effective connection and multicast transmission of DASH/HTTP on the network.

The multicast receiver may use TCP/IP to receive a packet stream transmitted in a multicast manner. In addition, the multicast receiver may use HTTP for a request for a packet stream, a response to the received data, and the like. When the multicast sender uses DASH for adaptive streaming, the multicast receiver may include a DASH client. Data that is adaptively streamed using DASH is configured in a file format transmitted from the server. Accordingly, the multicast receiver may use a file format related protocol capable of identifying the file format and a media codec capable of decoding the identified media format.

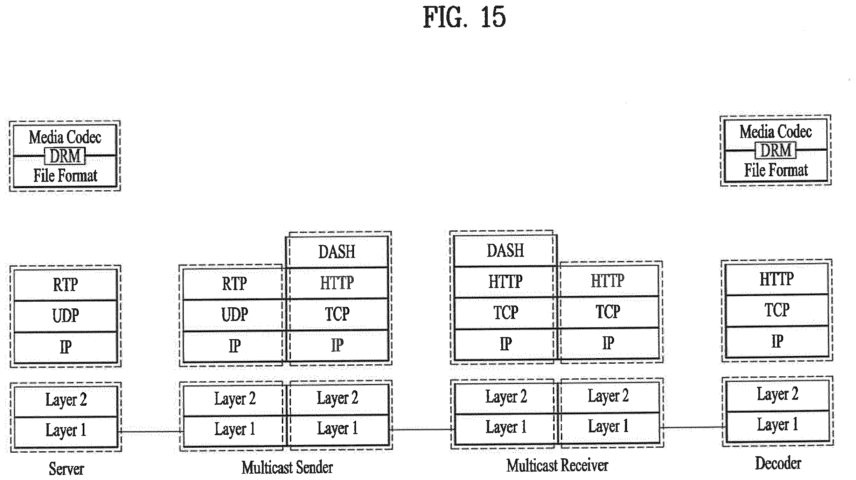

FIG. 15 is a diagram illustrating a media delivery protocol for IP multicasting according to an embodiment of the present invention. The media delivery protocol is a specific embodiment of a protocol according to a path through which media content is transmitted. This embodiment represents a case where the multicast receiver is configured as a device or module separate from the decoder (media player). Therefore, the multicast receiver needs a process of transmitting a received multicast stream to the decoding device (decoder).

The multicast receiver may use TCP/IP to receive a packet stream transmitted in a multicast manner. In addition, the multicast receiver may use HTTP for a request for a packet stream, a response to the received data, and the like. When the multicast sender uses DASH for adaptive streaming, the multicast receiver may include a DASH client. The multicast receiver may serve as a proxy for data that is adaptively streamed using DASH. The multicast receiver may deliver the data to the decoding device. Since the number of decoding devices connected to the multicast receiver may be limited, the corresponding connection may be based on unicast transmission. Accordingly, the multicast receiver may use HTTP and TCP/IP as protocols for unicast connection.

The decoding device may use a unicast protocol to receive data transmitted from the multicast receiver. Data delivered by HTTP unicast may have a file format transmitted by the server. Accordingly, the decoding device may use a file format related protocol capable of identifying the file format and a media codec capable of decoding the identified media format. Operations of the other protocols may be the same as those in the embodiment described with reference to the previous drawings.

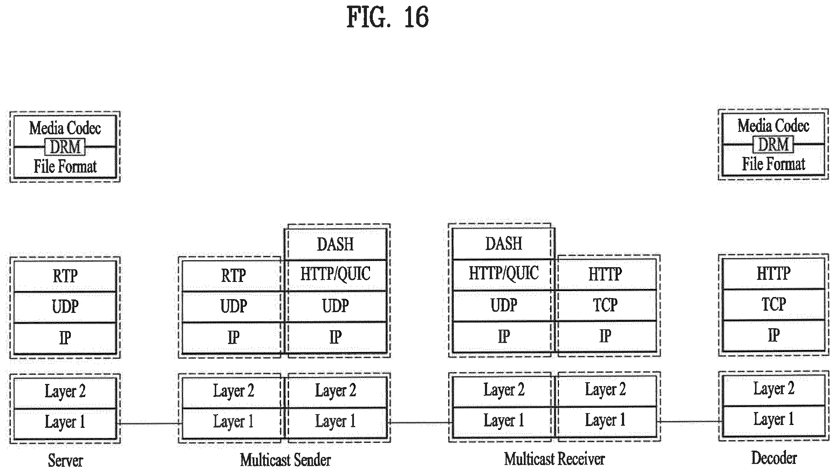

FIG. 16 is a diagram illustrating a media delivery protocol for IP multicasting according to an embodiment of the present invention. For transmission of the DASH segment, the Quick UDP Internet Connections (QUIC) protocol may be used. The multicast scheme using TCP/IP may incur delays in establishing connections and may not be suitable for immediate transmission of streaming data. In the QUIC based protocol, QUIC is responsible for a process of connection and flow control. In addition, QUIC may use HTTP/2, thereby addressing the issue of transmission delay incurred by the existing protocol HTTP. In addition, streaming data may be immediately transmitted using UDP/IP. Operations of the other protocols are the same as those in the above-described embodiment.

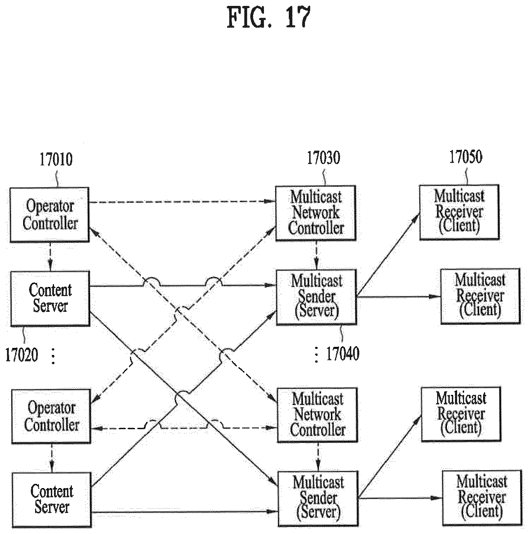

FIG. 17 illustrates data transmission over a plurality of multicast network according to an embodiment of the present invention. In the figure, the dotted lines represent the flow of signaling information, and the solid lines represent the flow of service content data including media data. In an existing system for providing a broadcast service or a live streaming service, a content server and a multicast sender are implemented in the same apparatus. Even when the content server and the multicast sender are implemented as separate devices, they operate within the same network. Accordingly, information between the content server and the multicast sender may be pre-recognized on both sides. In addition, a separate procedure for establishing connection is not required between the content server and the multicast sender, and content may be delivered in a pre-fixed network. Therefore, to provide a service over a network other than the network currently serving the user, a separate transcoding operation should be performed or a separate server for multicast transmission should be built. That is, a content server and a multicast server should be constructed for each network for providing a service, which is a disadvantage. Therefore, in order to provide an adaptive multicast streaming service based on the network architecture described above, a procedure of dynamic connection establishment/release between the content server and the multicast sender needs to be supported. That is, one multicast sender should be enabled to establish/release connection with a plurality of content servers through a dynamic connect-release procedure, and one content server should also be enabled to establish/release connection with a plurality of multicast senders through the dynamic connect- release procedure. To this end, a connection may be freely established and released dynamically depending on the service provided by the content server. In addition, when a new connection is needed, a common framework may be used to reduce complexity of individual network connections. In the network architecture described above, content delivered from the content server may be delivered to the multicast sender over a plurality of multicast networks, and the multicast sender may forward the content delivered from a plurality of content servers to the receiver of the user network. In operating such networks, it may be necessary to deliver content of a specific content server to an appropriate user network. In particular, in live streaming such as sporting events, it is necessary for multiple content providers to connect to multiple multicast networks. In addition, the multicast server of a multicast network should transmit a plurality of input streaming contents to the user network in real time. The content server described above is a component of the content network, and the multicast server is a component of the multicast network. In the description above, the content server may be referred to as a content network, and the multicast sender may be referred to as a multicast network.

In the network architecture of a plurality multicast networks as shown in the figure, the followings may be considered. The figure illustrates a process of delivering content from a plurality of content networks to a plurality of multicast networks. A content network may include an operator controller 17010 and a content server 17020. In addition, a multicast network may include a multicast network controller 17030 and a multicast sender 17040. The content server 1720 may be a content packager or an apparatus configured to transmit a broadcast stream in live streaming. In such network architecture, when the content server 17020 belonging to the content network transmits content, the multicast sender 17040 may manage content that is delivered from the plurality of the content networks and transmit the content to a multicast receiver 17050 using an appropriate method. In addition, the operation entity of the content network may be different from that of the multicast network, and accordingly it is necessary to establish and release a connection between the content network and the multicast network according to the characteristics of the content. In order for the multicast sender to properly manage the content delivered in this manner, the multicast sender may identify the content transmitted from each content network.

Therefore, the process of establishing a connection between the content network and the multicast network is necessary. Through the process, a new content network and the multicast network may check the network information about each other and then proceed with the procedure for actually transmitting the content. Hereinafter, the operation procedure in such architecture including a plurality of the multicast networks will be described.

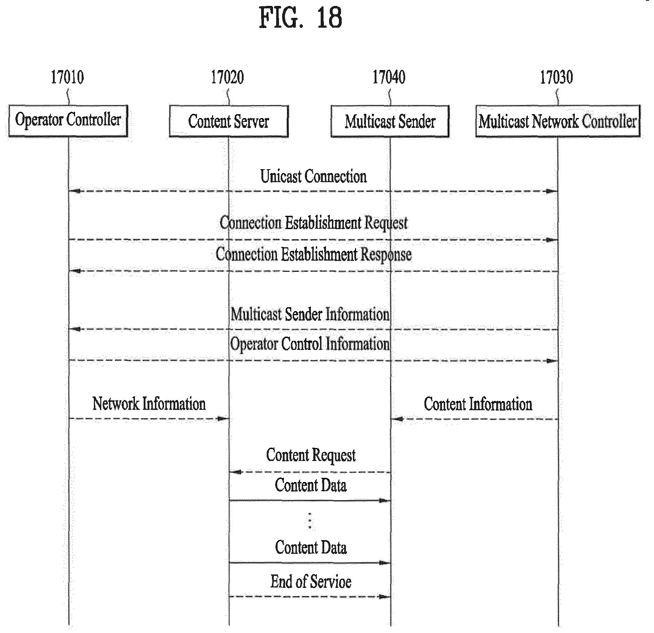

FIG. 18 shows an operation procedure for data transmission between the elements constituting a plurality of content networks and a plurality of multicast networks according to an embodiment of the present invention. The content networks may each include an operator controller 17010 and a content server 17020. The multicast networks may each include a multicast network controller 17030 and a multicast sender 17040. In the description below, the process of establishing a connection among the operator controller 17010, the content server 17020, the multicast network controller 17030, and the multicast sender 17040 and transmitting content data will be described.

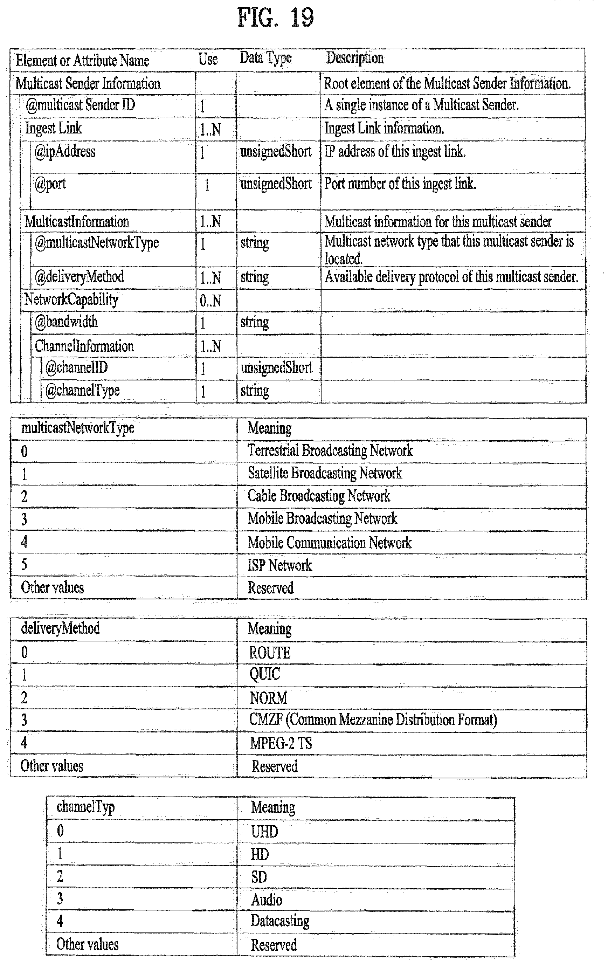

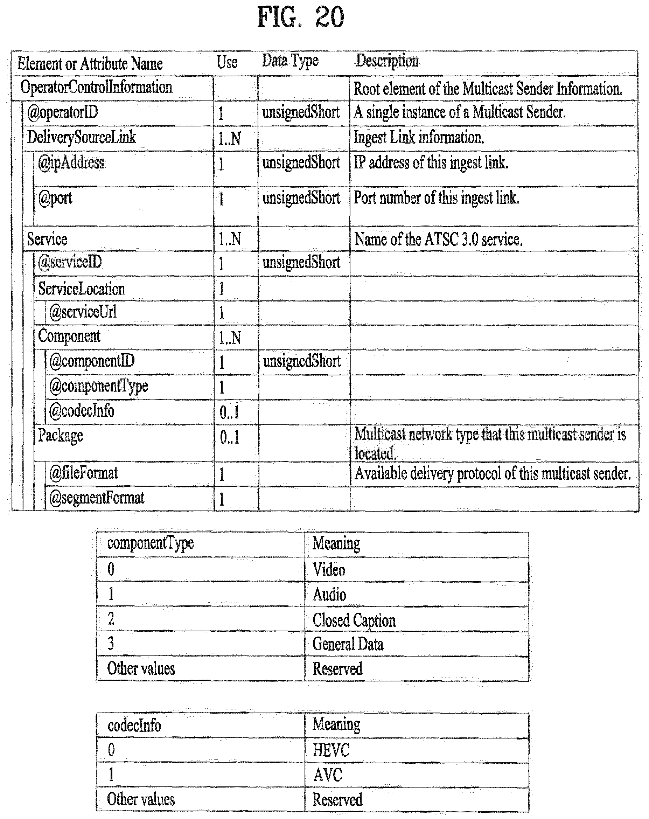

The operator controller 17010 and the multicast network controller 1730 may establish a unicast connection for mutual message transmission. The operator controller 17010 may request establishment of a connection for content transmission using the established unicast connection. The multicast network controller 1730 may transmit a response to the connection establishment request to the operator controller 17010. The multicast network controller 1730 may then transmit a 'Multicast Sender Information' message, which is information about the multicast sender 17040, to the operator controller 1710. The 'Multicast Sender Information' message will be described in detail with reference to FIG. 19. In response, the operator controller 17010 may transmit an 'operator control information' message, which is information about the content that the content server 1720 has, to the multicast network controller 1730. The 'operator control information' message will be described in detail with reference to FIG. 20. The operator controller 1710 may identify the information about the multicast network through the 'Multicast Sender Information' message, and transmit network information and channel information about the multicast network to the content server 17020. The multicast network controller 1730 may transmit information about the content that is to be transmitted by adaptive multicast to the multicast sender 17040. The multicast sender 17040 make a request to the content server 17020 for a content data to be transmitted by multicasting, using the information about the content received from the multicast network controller 17030. The content server 17020 may transmit content data through an ingest link of the multicast sender 17040 based on the information requested by the multicast sender 17040. The ingest link is link information indicating where to transmit the content data. While the link service continues, this process may be repeated. When the service is terminated and there is no more content data to transmit, the content server 17020 may inform the multicast sender 17040 of termination of the service. In this case, in transmitting content data over a plurality of multicast networks, by repeating the process between the operation of establishing a unicast connection to the operation of informing the multicast sender of information about the content to have a process of establishing connection with each multicast network.

FIG. 19 shows information delivered by a multicast network controller in the architecture having a plurality of multicast networks according to an embodiment of the present invention. The multicast network controller may deliver multicast-related parameters of the multicast network to the operator controller of the content network to enable the operator controller to identify a multicast network over which the content network and the content server can transmit content data. The configuration information data that the multicast network controller delivers to the operator controller is shown in the figure.

MulticastSenderInformation is the root element of the multicast sender information. The @multicastSenderID attribute indicates the ID of a multicast sender. Each multicast sender has a unique ID value. The IngestLink element indicates information about the input unit (reception unit) of the multicast sender that the content server should connect to in order to transmit adaptive multicast content. One multicast sender may have a plurality of ingest links, and the same content server may access a plurality of ingest links for a plurality of services. The IngestLink element may include an IP address and a port number. The @ipAddress attribute may indicate an IP address for an ingest link, and the @port attribute may indicate a port number for the ingest link. MulticastInformation is an element indicating information about a network to be transmitted in the multicast manner and may have the following attributes. The @multicastNetworkType attribute may indicate the type or form of a network constituting the multicast network and may have a value as shown in the figure. That is, it may indicate a terrestrial broadcast network, a satellite broadcast network, a cable broadcast network, a mobile broadcast network, a mobile communication network, an ISP network, or the like depending on the value thereof. The @deliveryMethod attribute may indicate a delivery protocol used for multicast transmission in the multicast network. As shown in the figure, the delivery protocol may be ROUTE, QUIC, NORM, CMZF, MPEG-2 TS, or the like. The NetworkCapability element may indicate the capability of the multicast network. The @bandwidth attribute may indicate a bandwidth in which transmission of the multicast sender may occur. The ChannelInformation element may indicate a channel operated by the multicast sender. This element may include the following attributes. The @channelID attribute may indicate an identifier of a channel operated by the multicast sender, and the @channelType attribute may indicate the type of the channel. The attribute has meanings according to values as shown in the figure. That is, the @channelType attribute may signal a channel type among UHD, HD, SD, Audio, and Datacasting.

The multicast network controller may deliver the above-described information to the operator controller, and the operator controller may determine a multicast sender or multicast network through which service data in the content server is to be transmitted to a client device, based on the information.

FIG. 20 shows information delivered to a multicast network controller by an operator controller over a plurality of multicast networks according to an embodiment of the present invention. The operator controller of a content network may deliver configuration information about the content transmitted from the content server, and a multicast network may identify and collect content data to be transmitted to the user network based on the information. In this operation, the configuration information about the content may be delivered using an in-band or out-of-band scheme. The data format for delivering such information from the operator controller to the multicast network controller is shown in the figure. The elements and attributes may be defined as follows:

OperatorControlInformation is a root element for operator control information. The @operatorID attribute indicates a unique identifier of the operator to transmit content. DeliverySourceLink is an element for link information on which content is transmitted, and the indicated link is connected to an ingest link of a multicast sender. The @ipAddress attribute indicates the IP address of the delivery source link. The @port attribute indicates the port number of the delivery source link. Service is an element for identifying information about a service that may be transmitted by the content server. The @serviceID attribute may indicate an identifier for the service. ServiceLocation is an element for the location where the service is stored. For live streaming, it may indicate a location for a cache where content is temporarily stored. The @serviceUrl attribute may indicate Uniform Resource Locator (url) information about the service. Component is an element for a component constituting the service, and one or more Component elements are configured in one service to construct the service. The @componentID attribute indicates an identifier of a component constituting the service, and the @componentType attribute indicates the type of the component and has values as shown in the figure. That is, depending on the value, the @componentType attribute may indicate that the component is of a video, audio, subtitle, or general data type. The @codecInfo attribute may indicate a codec by which the corresponding component is configured. This attribute may be configured only when the corresponding component employs a codec. Here, when @componentType indicates video, the attribute may be configured as shown in the figure. That is, it may indicate that Advanced Video Coding (HEVC), Advanced Video Coding (AVC), or the like is used as a video codec, according to the value. Package may be an element for a package in which a service to be transmitted is configured. The @fileFormat attribute indicates a media file format in which the package is configured. The @segmentFormat attribute indicates segment formation in which the file is configured. The operating controller may deliver the above-described information to the multicast network controller, and the multicast network controller may forward the above-described information to the multicast sender. The multicast sender may make a request to the content server for service data based on the above-described information.

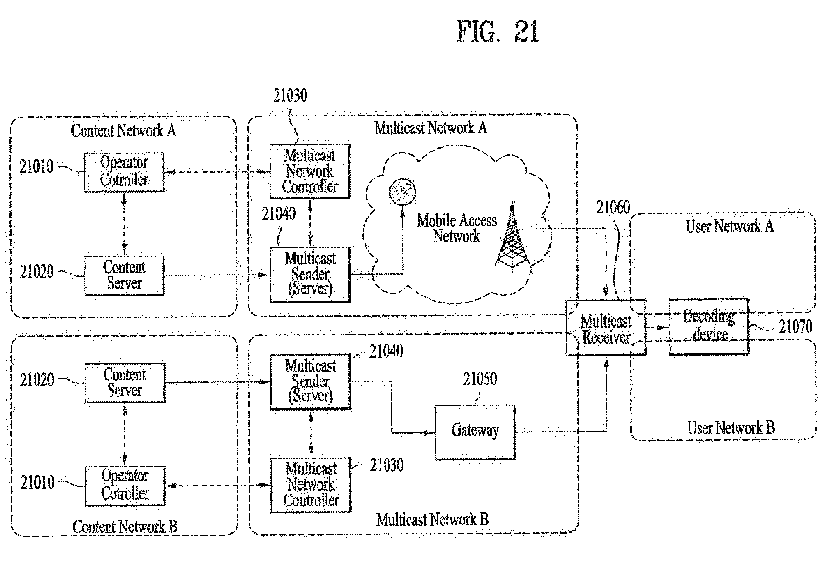

FIG. 21 is a diagram illustrating a multi-network delivery according to an embodiment of the present invention. In a network supporting adaptive media streaming, a content server 21020 belonging to a plurality of content networks may provide a service over a plurality of multicast networks. In such an environment, a multicast receiver 21060 may receive streaming content as it connects to multiple networks. This operation may occur in a mobile receiver 21070. For example, a streaming receiver such as a smartphone may connect to a mobile network to receive multicast content, or may connect to a Wi-Fi network provided by an ISP to receive multicast content. FIG. 21 illustrates architecture in which the multicast receiver 21060 connects to a plurality of networks to receive content in an adaptive media streaming environment.

A case where respect networks provide different content as in the network architecture shown in FIG. 21 will be described as an example. In multicast network A, which employs a mobile network, a content provider (content network A) associated with an communication operator may provide an adaptive multicast streaming service. In multicast network B, which employs an ISP network, an OTT service provider (content network B) associated with the ISP provider may provide a service. In this case, each multicast network is associated with a separate content provider. In addition, the multicast receiver should separately subscribe and connect to multicast network A and multicast network B to be provided with the service. That is, this corresponds to a case where the entity to provide adaptive media streaming over multicast network A including the marble network is different from the entity to provide adaptive media streaming over multicast network B including the ISP network. Alternatively, this corresponds to a case where a separate system is used in the process before the content for adaptive media streaming is delivered to the multicast receiver.

From a network perspective, each piece of content is provided using a separate network. In this case, since each adaptive media streaming service is separately transmitted from the content network to the multicast receiver, the multicast receiver should be provided with a separate reception module for each network, a delivery module for the content, and a media processing module. In addition, even if the content is the same, the multicast receiver should make a request to a separate multicast sender for a manifest file for receiving adaptive media streaming and receive the manifest file.

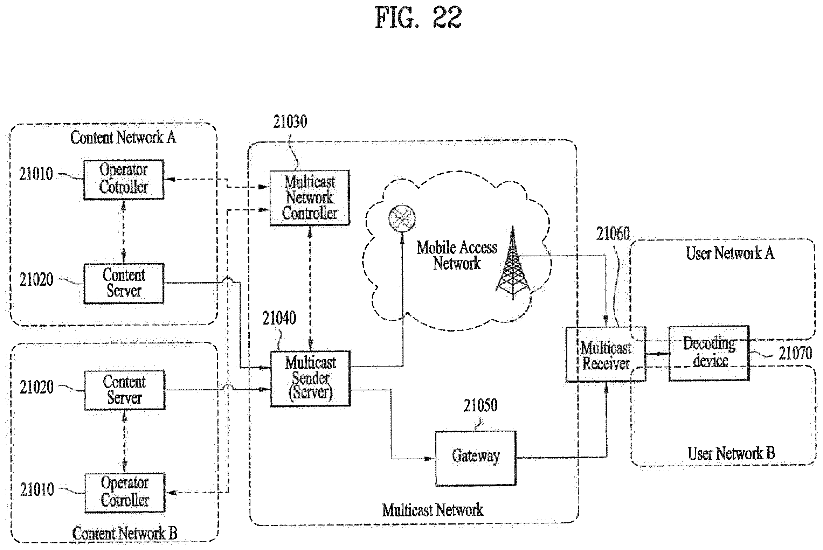

FIG. 22 is a diagram illustrating a multi-network delivery according to another embodiment of the present invention. The illustrated adaptive media streaming environment represents other architecture in which the multicast receiver 21060 connects to a plurality of networks to receive content. That is, as in the illustrated network architecture, the same content is provided from the multicast network, but there is a plurality of paths or connection methods for delivering content data to the multicast receiver.

In this embodiment, even if the pieces of content provided by the respective content networks are different from each other, the content is provided by a single multicast network, and the multicast network provides a plurality of connection methods for the multicast receiver. Thereby, the same adaptive media streaming service may be provided for both a case where the multicast receiver 21060 uses a mobile network and a case where the multicast receiver uses an ISP network. When the ISP network is used, the multicast receiver may receive a service through the gateway 21050. In this case, one multicast network may be associated with a plurality of content providers. The multicast receiver 21060 may receive adaptive media streaming from the multicast sender 21040 using the same delivery method, but may connect to a plurality of access networks or ISP networks as delivery paths. That is, adaptive media streaming may be provided from the same entity 21010, 21020, but the multicast receiver 21060 may selectively connect to a mobile network or an ISP network to receive the adaptive media streaming.

In this embodiment, from a network perspective, each piece of content is provided over the same network, that is, one multicast network. In this case, the adaptive media streaming service may be provided by the same multicast sender 21040, and the same service may be provided regardless of the connection method of the multicast receiver 21060. Thus, the multicast receiver should have a separate reception module in relation to connection to each access network, may use the same delivery and media processing modules for the content even if different transmission paths are used. In addition, for the same content, the multicast receiver may request and receive a manifest file for receiving an access from the same multicast sender 21040 regardless of the method for connecting to the access network.

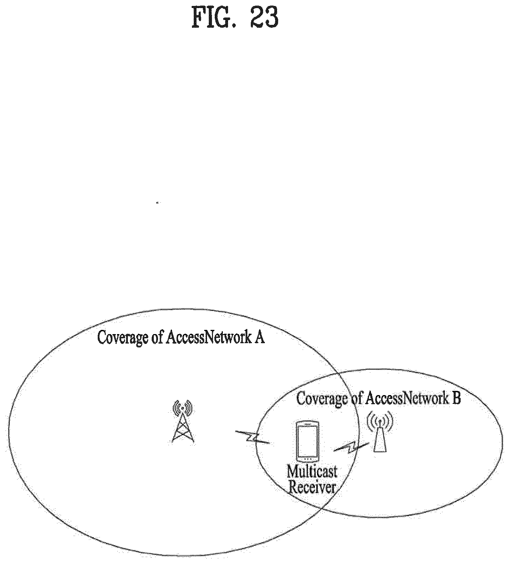

FIG. 23 is a diagram illustrating coverage in a multi-network delivery environment according to an embodiment of the present invention. The figure shows the coverage within which each access network can provide a service in the network environment described above. A mobile network is constructed for the entire region of a specific country, and thus has a large coverage area and may maintain a connection through handoff even when a receiver moves from one cell to another. On the other hand, networks such as a Wi-Fi network do not support handoff even when they are deployed in all areas, and thus they are required to repeat connection and disconnection according to movement of the receiver. Through this operation, the multicast receiver may receive adaptive media streaming between a plurality of access networks. For a mobile multicast receiver which is movable, the coverage for each access network may be changed according to change in location of the mobile multicast receiver. Therefore, the multicast receiver needs to check whether the receiver can receive adaptive media streaming at a current location.

For such a receiver, the user may not always receive adaptive media streaming, but may perform other tasks (calling, web access, etc.) through multitasking. In this case, even if the receiver is at a location where the receiver can receive adaptive media streaming, it does not need to keep the multicast receiver module activated. It is efficient for the receiver according to one embodiment of the present invention to perform the operation of receiving adaptive media streaming according to an execution command from the user. In particular, since power efficiency is important to a mobile receiver employing a battery, the adaptive media streaming reception module may operate in a power-off or standby mode when it does not receive a corresponding service.

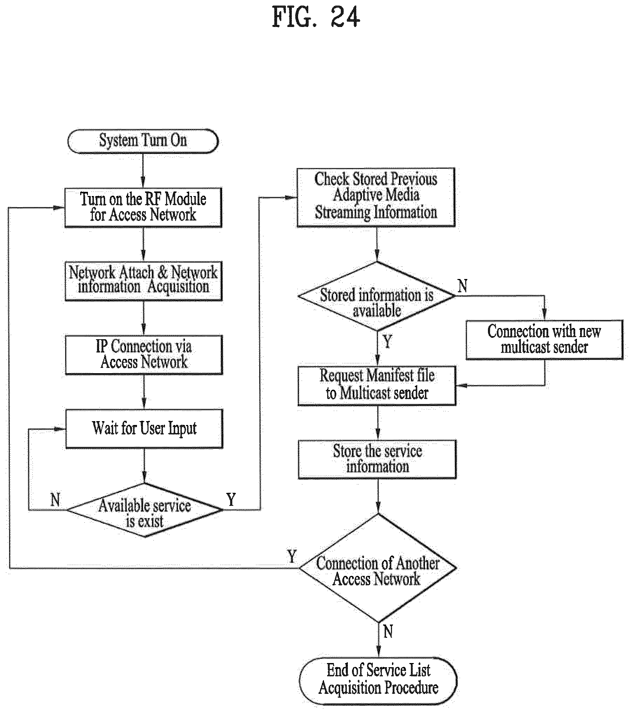

FIG. 24 illustrates a method of acquiring service list related information in a multi-network delivery environment according to an embodiment of the present invention. This figure illustrates a process of acquiring service list related information such as a manifest file by a multicast receiver that receives adaptive media streaming over a plurality of access networks in network example #1 of FIG. 21 described above. The service list related information is information that is required for the multicast receiver to receive content data. The receiver may operate in the following procedure.

Assuming that the receiver is initially in the power-off state, the receiver is turned on to turn on the RF module to perform network search according to the default operation procedure of the device. The receiver connects to a network according to the default operation procedure of the device and acquires network related information. When connected to the network, the receiver establishes an IP connection through a corresponding access network. Once this process is completed, the receiver of the device may receive general IP data as well as streaming over the IP connection. The receiver may wait for a specific user input for adaptive media streaming. If the receiver is configured for the purpose of streaming-oriented reception, it may automatically perform the following process without additional user input. The receiver may check whether a service corresponding to the user input can be provided, using pre-stored subscriber information. In this regard, if the receiver has previously stored information about a relevant adaptive media streaming service, the receiver may use the information. If there is no information about the adaptive media streaming service stored in the device, or the usage period of the information has expired, the receiver may establish a new connection to the multicast sender. For example, the receiver may connect to the multicast server by establishing an HTTP connection. The receiver may use the information about the stored adaptive media streaming service or the new HTTP connection to make a request to the multicast sender for a manifest file for receiving media. Using the manifest file received from the multicast sender, the receiver may acquire information about a service list that the multicast sender can provide, and store the same for later use. The stored multicast service information may allow the user to check the corresponding information on the receiver or configure and store a Service Map DB to enable quick switching between adaptive media streaming channels. When there are other access networks to which the multicast receiver can connect, the receiver may repeat the above-described process for receiving the service list related information about the other networks. That is, when there is a plurality of access networks, the receiver should separately receive service list related information provided by each access network. Once the receiver acquires all the service list information about connectable access networks and stores the same in the storage, the receiver may terminate the scanning process. In the case where reception of adaptive media streaming reception is triggered by a user's input or the like before such a series of processes are completed, the receiver may perform the process in the background using an idle bandwidth or the like.

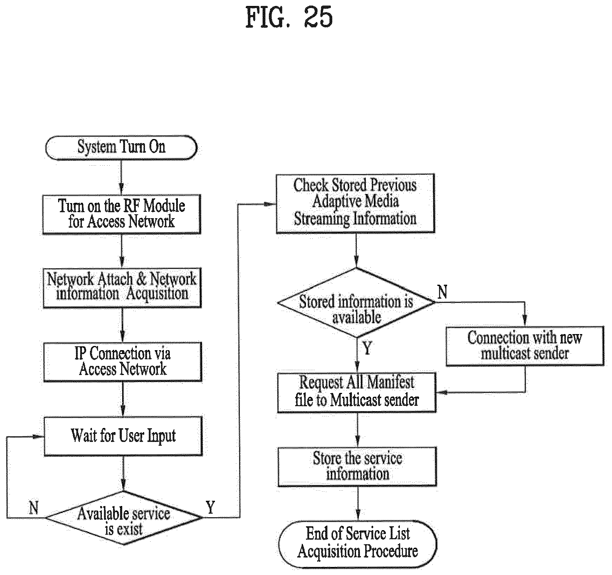

FIG. 25 illustrates a method of acquiring service list related information in a multi-network delivery environment according to another embodiment of the present invention. This figure illustrates a process of acquiring service list related information such as a manifest file by a multicast receiver that receives adaptive media streaming over a plurality of access networks in network example #2 of FIG. 22 described above. The service list related information is information that is required for the multicast receiver to receive content data. The receiver may operate in the following procedure.

Assuming that the receiver is initially in the power-off state, the receiver is turned on to turn on the RF module to perform network search according to the default operation procedure of the device. Then, the receiver may connect to a default network, to which the receiver can connect, or connect to a network according to the user's setting. The receiver connects to a network according to the default operation procedure of the device and acquires network related information. When connected to the network, the receiver establishes an IP connection through a corresponding access network. Once this process is completed, the receiver of the device may receive general IP data as well as streaming over the IP connection. The receiver may wait for a specific user input for adaptive media streaming. If the receiver is configured for the purpose of streaming-oriented reception, it may automatically perform the following process without additional user input. The receiver may check whether a service corresponding to the user input can be provided, using pre-stored subscriber information. In this regard, if the receiver has previously stored information about a relevant adaptive media streaming service, the receiver may use the information. If there is no information about the adaptive media streaming service stored in the device, or the usage period of the information has expired, the receiver may establish a new connection to the multicast sender. For example, the receiver may connect to the multicast server by establishing an HTTP connection. The receiver may use the information about the stored adaptive media streaming service or the new HTTP connection to make a request to the multicast sender for a manifest file for receiving media. Using the manifest file received from the multicast sender, the receiver may acquire information about a service list that the multicast sender can provide, and store the same for later use. The stored multicast service information may allow the user to check the corresponding information on the receiver or configure and store a Service Map DB to enable quick switching between adaptive media streaming channels. In this case, unlike example #1 described above, even if the streaming service is provided over a plurality of different access networks, the receiver may acquire all the service list information because the multicast sender is the same. Therefore, the receiver may terminate the scanning process without requesting additional service list information.

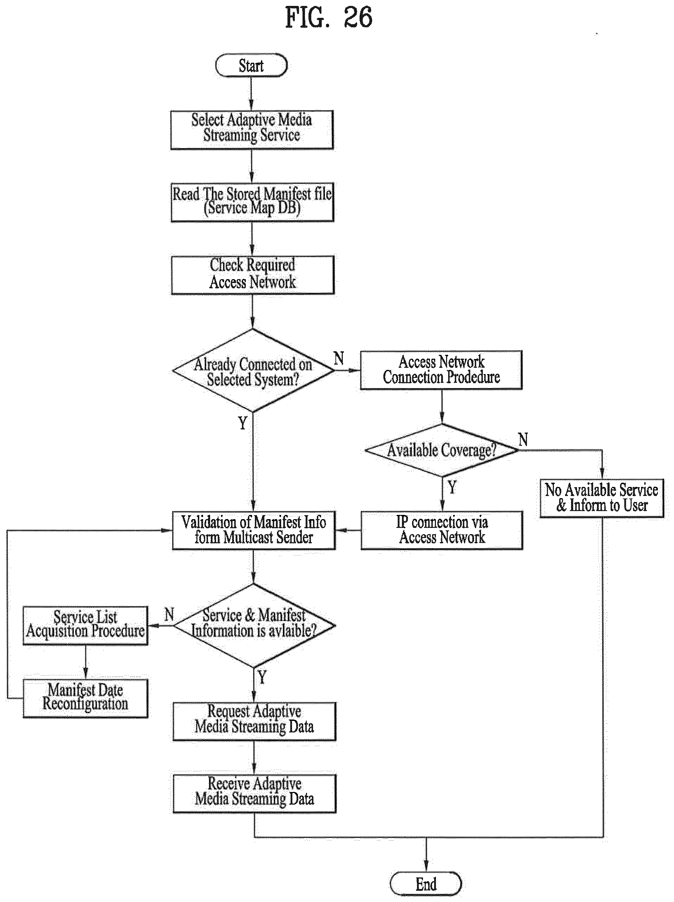

FIG. 26 illustrates a process of receiving adaptive media streaming according to an embodiment of the present invention. The figure illustrates a process in which a receiver actually receives adaptive media streaming after information about a service list is stored according to the method described with reference to FIGs. 24 to 25. The receiver may operate in the following procedure. The receiver may receive an input for selecting a specific adaptive media streaming service. Here, the input may be a user input received through a User Interface (UI) on the device. The receiver may enter a procedure of reading a manifest file stored in the service map DB in the device for the selected service and receiving adaptive media streaming. The receiver checks if it is connected to an access network in order to connect to the multicast sender using the manifest data. In the case where a multicast sender according to the access network is configured separately, the receiver checks whether it is connected to the access network. In the case where a single multicast sender provides a service over a plurality of access networks as in network example #2 of FIG. 22, the receiver checks whether it is connected to any access network. If the receiver is not connected to any access network, the receiver performs the procedure for connecting to an access network and the IP connection. If the receiver cannot connect to any access network according to the status of the receiver, the receiver may delivery a related message to the user through a UI or the like to indicate that no network is connectable. After connecting to an access network and completing the IP connection, the receiver may perform a process of verifying whether data is normal, such as whether the manifest data stored in the receiver has expired, through a connection with the multicast sender. If the manifest data is no longer available, the receiver may perform the procedure of acquiring a service list for the selected service. Through this procedure, the receiver may perform a procedure of recovering the manifest data for the service. When the manifest data for adaptive media streaming is normal, the multicast receiver may make a request for content data to the multicast sender using the manifest data. The receiver receives the requested content data from the multicast sender and plays the same. The receiver may persistently receive and play media segments by repeating the procedure of requesting and receiving content data from the multicast sender using the manifest data.

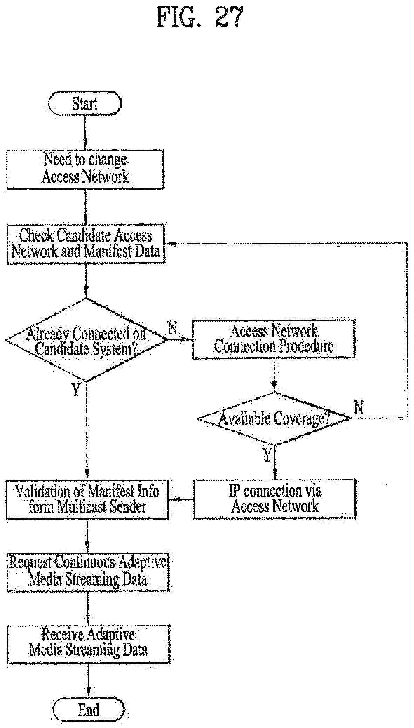

FIG. 27 is a diagram illustrating a process in which access networks to which an adaptive media streaming reception apparatus is connected are changed according to an embodiment of the present invention. The receiver may perform such a procedure in network example #2 described above. In network example #1, when the access networks are changed, not only a separate network but also an adaptive media streaming service is changed. In this case, the receiver should repeat the streaming acquisition procedure described with reference to FIG. 24. In contrast, in the case of this figure, only the access network is changed while the adaptive media streaming service remains unchanged. For example, a receiver that is being provided with a streaming service over a Wi-Fi network may move away from an access point to which the receiver is connected and be connected to a mobile access network. The receiver may operate in the following procedure.

While the receiver is receiving adaptive media streaming, the signal strength of the access network to which the receiver is connected may be weakened due to movement of the receiver. The receiver may detect that it needs to switch connection from the access network to which the receiver is currently connected to another access network. The receiver may check whether the receiver can access another candidate access network through an access network related procedure. If necessary, the receiver may verify that there is manifest data for the corresponding access network. In the case where the receiver can connect to only one access network at a time according to the function of the receiver, the receiver performs an access procedure for a target access network to be connected to establish an IP connection. In contrast, when an IP connection is established by connecting to a plurality of access networks according to the function of the receiver, the receiver may omit the access procedure for the additional access networks and check whether the manifest data is available according to the access network. When connection to the access network is completed and verification of the manifest data is completed, the receiver makes a request for continuous content for the portion where the streaming service is stopped. For example, in the case of DASH, the receiver may request and receive period information following the last received period based on the MPD information. The receiver receives and plays the requested content data.

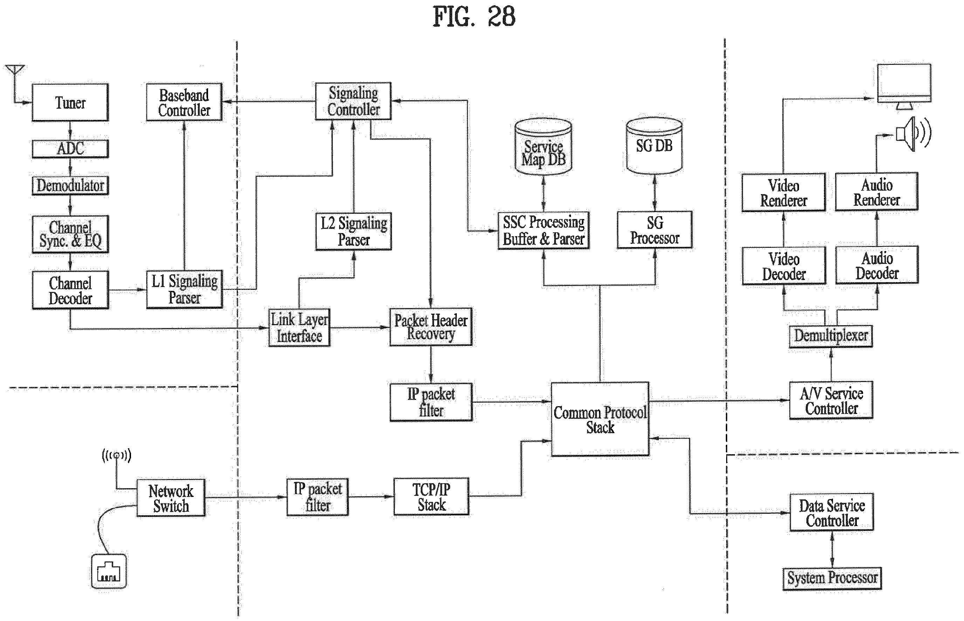

FIG. 28 is a diagram illustrating a receiver structure according to an embodiment of the present invention. The receiver may receive a broadcast signal or a multicast signal using a tuner. The receiver may convert an analog signal into a digital signal using an analog-digital converter (ADC) and demodulate the received signal using a demodulator. The receiver may perform synchronization and equalization on the received signal using channel synchronization and equalizer (EQ), and decode the received signal using a channel decoder. The decoded signal is parsed by a layer 1 (L1) signaling parser, and thus the receiver may acquire L1 signaling information. The L1 signaling information may be delivered to a baseband controller of the receiver and used to acquire physical layer data. In addition, the L1 signaling information may be input to the signaling controller of the receiver. In addition, the decoded signal may be input to a link layer interface and parsed by an L2 signaling parser, and the L2 signaling information may be input to the signaling controller. The signaling controller may communicate with a service signaling channel (ssc) processing buffer and a parser to update a service MAP database (DB). In addition, a service guide (SG) processor may update the service guide DB. The receiver may restore a packet header according to the signaling information input to the signaling controller and receive an IP packet using an IP packet filter. In addition, the network switch of the receiver may receive the IP packet through wired or wireless communication, using a TCP/IP stack. The received IP packet is input to the A/V service controller via the common protocol stack. The demultiplexer of the receiver may demultiplex audio data and video data. The receiver may output audio data using an audio decoder and an audio renderer, and output video data using a video decoder and a video renderer.

Although the description of the present invention is explained with reference to each of the accompanying drawings for clarity, it is possible to design new embodiments by merging the embodiments shown in the accompanying drawings with each other. If a recording medium readable by a computer, in which programs for executing the embodiments mentioned in the foregoing description are recorded, is designed by those skilled in the art, it may fall within the scope of the appended claims and their equivalents.

The devices and methods according to the present invention may be non-limited by the configurations and methods of the embodiments mentioned in the foregoing description. The embodiments mentioned in the foregoing description may be configured in a manner of being selectively combined with one another entirely or in part to enable various modifications.

In addition, the image processing method according to the present invention may be implemented with processor-readable code in a processor-readable recording medium provided to a network device. The processor-readable medium may include all kinds of recording devices capable of storing data readable by a processor. The processor-readable medium may include one of ROM, RAM, CD-ROM, magnetic tapes, floppy disks, optical data storage devices, and the like and also include carrier-wave type implementation such as a transmission via Internet. Furthermore, as the processor-readable recording medium is distributed to a computer system connected via a network, processor-readable code may be saved and executed in a distributed manner.

Although the invention has been described with reference to the exemplary embodiments, those skilled in the art will appreciate that various modifications and variations can be made in the present invention without departing from the spirit or scope of the invention described in the appended claims. Such modifications are not to be understood individually from the technical idea or viewpoint of the present invention

Both apparatus and method inventions are described in this specification and descriptions of both the apparatus and method inventions are complementarily applicable, if necessary.

### [Mode for Invention]

Various embodiments have been described in the best mode for carrying out the invention.

### [Industrial Applicability]

The present invention is usable and repeatable in the field of broadcast and video signal processing.

## Claims

1. A multicast system comprising:
a content server containing content data;
an operator controller configured to provide first signaling information to the content server;
a multicast sender configured to receive the content data from the content server and transmit the same; and
a multicast network controller configured to provide second signaling information to the multicast sender,
wherein the multicast sender is connected to a plurality of multicast networks.

2. The multicast system of claim 1, wherein the operator controller transmits operator control information to the multicast network controller,
wherein the multicast network controller provides information included in the operator control information as the second signaling information.

3. The multicast system of claim 2, wherein the operator control information comprises configuration information about the content data transmitted by the content server, and link information through which the content data is transmitted.

4. The multicast system of claim 1, wherein the multicast network controller transmits multicast sender information to the operator controller,
wherein the operator controller transmits the multicast sender information as the first signaling information.

5. The multicast system of claim 4, wherein the multicast sender information comprises ingest link information indicating a destination of the content data transmitted by the content server.

6. The multicast system of claim 1, wherein the plurality of multicast networks comprises a mobile access network and an Internet Service Provider (ISP) network.

7. A multicast method comprising:
transmitting and receiving signaling information by an operator controller and a multicast network controller;
providing, by the operator controller, first signaling information to the content server based on the signaling information; and
providing, by the multicast network controller, second signaling information to a multicast sender based on the signaling information,
wherein the multicast sender is connected to a plurality of multicast networks.

8. The multicast method of claim 7, wherein the operator controller transmits operator control information to the multicast network controller,
wherein the multicast network controller provides information included in the operator control information as the second signaling information.

9. The multicast method of claim 8, wherein the operator control information comprises configuration information about the content data transmitted by the content server, and link information through which the content data is transmitted.

10. The multicast method of claim 7, wherein the multicast network controller transmits multicast sender information to the operator controller,
wherein the operator controller transmits the multicast sender information as the first signaling information.

11. The multicast method of claim 10, wherein the multicast sender information comprises ingest link information indicating a destination of the content data transmitted by the content server.

12. The multicast method of claim 7 wherein the plurality of multicast networks comprises a mobile access network and an Internet Service Provider (ISP) network.
